# EUROPEAN PATENT SPECIFICATION

(11) **EP 4 368 846 B1**
(45) Date of publication and mention of the grant of the patent: **03.06.2026**
(21) Application number: 23205424.7
(22) Date of filing: 24.10.2023
(51) Int. Cl.: F16C 23/08, F16C 35/077, F16C 19/06

(54) **MODULAR SUPPORT ASSEMBLY**
MODULARE STÜTZANORDNUNG
ENSEMBLE SUPPORT MODULAIRE

(30) Priority: 11.11.2022 IT 202200023283
(43) Date of publication of application: 15.05.2024
(73) Proprietor: Aktiebolaget SKF, 415 50 Göteborg (SE)
(72) Inventor: Frezza, Pasquale, 81031 Aversa (CE) (IT); Bertolini, Andrea A, 54033 Carrara (IT); Baracca, Fausto, 54100 Massa (IT)
(74) Representative: Kohl, Thomas

(56) References cited:
- WO-A1-2021/160640
- US-A- 2 397 164
- US-A1- 2010 046 867
- US-A1- 2022 243 770

## Description

### Technical sector of the invention

The present invention relates to a support assembly.

In particular, the present invention relates to a modular support assembly for applications in the food industry, to which the description below will make specific reference without thereby losing its general nature.

### Prior art

In the food industry the support assemblies of the known type are formed by a casing made of composite material (for example, glass fibre reinforced plastic material) and provided with a flange for fixing to the frame of a machine, a bearing unit, which is located inside the casing in order to support a moving shaft and is provided with a spherical coupling for coupling with the said casing in order to compensate for possible static mounting misalignment of the moving shaft with respect to the fixed frame.

Owing to the spherical coupling, the bearing unit may not be mounted in its operating position inside a spherical mounting surface of the casing since it would interfere with the mounting surface itself. Therefore, mounting of the bearing unit is performed by inserting the bearing unit in a position rotated by 90° with respect to the operating position. The mounting surface of the casing also has a pair of insertion recesses: the presence of these insertion recesses, namely the absence of material, therefore allows rotation through 90° of the bearing unit thus inserted and positioning thereof in its operating position.

This special feature for ensuring the correct mounting of the bearing unit also helps facilitate the procedure for measuring the alignment torque of the support assembly. This test has the function of checking the degree of precision of the spherical coupling between bearing unit and casing, where, as may be deduced, the coupling must not be either too tight in order to avoid transmitting excessive tension to the moving shaft, nor too loose to ensure that the bearing unit is not movable inside the seat of the casing and, consequently, is unable to withstand and transmit the load under operating conditions.

In applications for the food industry, since the casing is made of a composite material and is therefore subject to irregular shrinkage during cooling following the hot-moulding step, correct values for correct coupling between bearing unit made of metal and casing made of composite material risk nevertheless causing abrasions on the casing.

The defects present on the surfaces of the casing and in particular present on the spherical mounting surface (for example visible fractures, exposed glass fibres, etc.) are absolutely unacceptable and result in a large number of components being discarded.

Finally, in some applications, including those in the food industry, the end user on occasions must reduce or increase the size of the shaft (and consequently of the bearing unit) without having to change the machine frame. As a result it is impossible to find a feasible solution for adapting a different-size bearing unit within the same casing. In particular, should there be an increase in the dimensions of the shaft and the bearing unit, it is not possible to imagine re-machining the casing mounting surface in order to widen it, without affecting the rest of the casing: the high degree of vibrations would reduce the strength of the casing itself.

The document US 2010/046867 A1 discloses a support assembly according to the preamble of claim 1.

The documents US 2 397 164 A and WO 2021/160640 A1 disclose each further support assembly with an insert.

The document US 2022/243770 A1 discloses a support assembly with a metal insert fully embedded in the casing.

### Summary of the invention

The object of the present invention is to provide a support assembly for applications in the food industry which does not have the aforementioned drawbacks.

According to the present invention a modular support assembly having the characteristic features described in the attached claims is provided.

### Brief description of the drawings

The invention will now be described with reference to the attached drawings which illustrate some non-limiting examples of embodiment of the invention, in which:
- Figure 1 shows a cross-sectional view of a first preferred embodiment of a support assembly provided in accordance with the present invention;
- Figure 2 shows a front view of the support assembly of Figure 1 ;
- Figure 3 shows a cross-sectional view of a second preferred embodiment of a support assembly provided in accordance with the present invention; and
- Figure 4 shows a front view of the support assembly of Figure 3.

### Detailed description

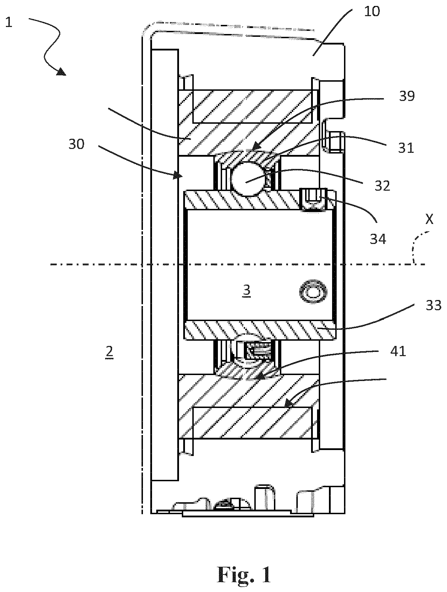

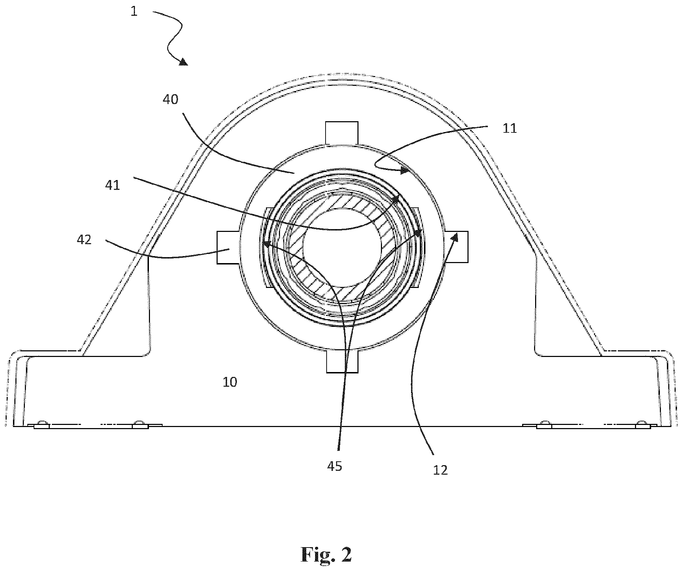

With reference to Figures 1 and 2, 1 denotes overall a support assembly which is particularly suitable for being arranged between a first mechanical element 2 and a second mechanical element 3, preferably, but not exclusively comprising a stationary frame 2 and a rotating shaft of a food industry machine (both of the known type and therefore only schematically shown in the Figures).

According to this first preferred embodiment, the support assembly 1 comprises a central axis X and comprises:
- a flanged casing 10, preferably made of composite material, suitable for mounting on the frame and provided internally with a radially internal mounting surface 11;
- a metal insert 40 mounted inside the mounting surface 11 of the casing 10 and having a radially internal, spherical, mounting surface 41; and
- a bearing unit 30 mounted inside the spherical mounting surface 41 and supporting the rotating shaft 3. The bearing unit 30 is also provided with a sealing device (of the known type and therefore not shown) arranged on opposite sides of the bearing unit 30 in order to prevent any entry of washing fluids or other contaminants inside the bearing unit 30.

The bearing unit 30 in turn comprises:
- a convex and stationary radially outer ring 31, provided with a radially external, spherical, mounting surface 39;
- a radially inner ring 33, rotatable about the central axis X and provided with a fixing device 34 for fixing the bearing unit 30 to the rotating shaft 3; and
- a plurality of rolling members 32, in particular spheres, arranged between the radially outer ring 31 and the radially inner ring 33 for relative rotation of the radially inner ring 33 with respect to the radially outer ring 31.

In all of the present description and in the claims, the terms and the expressions indicating positions and orientations such as "radial" and "axial" are understood as being in relation to the central axis of rotation X of the bearing unit 30.

Therefore, the support assembly 1 according to the present invention has the metal insert 40 which is interposed radially between the casing 10 and the bearing unit 30.

In this way the mounting of the bearing unit 30 inside the spherical mounting surface 41 and setting of the correct alignment torque do not create problems since the spherical coupling (between the radially external, spherical, mounting surface 39 of the radially outer ring 31 and the radially internal, spherical, mounting surface 41 of the metal insert 40) is realized between two metal surfaces and therefore may be sufficiently precise without creating damage to one of the two surfaces.

According to the claimed invention, the casing 10 is co-moulded with the metal insert 40.

According to a first preferred embodiment of the invention, the metal insert 40 is made as a single piece and comprises a pair of insertion recesses 45 configured to allow the insertion of the bearing unit 30 inside the spherical mounting surface 41 and the rotation of the bearing unit itself so that it is positioned in the mounting configuration. The insertion recesses 45 are formed along the spherical mounting surface 41 of the metal insert 40 and have a circumferential development with an angular opening of the about 30°.

Mounting of the bearing unit is performed by inserting the bearing unit in a position rotated by 90° with respect to the operating position. The presence of the insertion recesses 45, namely the absence of material, therefore allows rotation through 90° of the bearing unit thus inserted and positioning thereof in its operating position.

The metal insert 40 has, finally, a plurality of radially external protuberances 42 which, in the example shown in Figure 2, are four in number and are uniformly distributed at an angular distance of 90°. The protuberances 42 have a substantially parallelepiped shape.

The protuberances 42, during co-moulding with the casing 10, will form along the mounting surface 11 of the casing respective radially internal anchoring grooves 12. The housing which is created co-moulding of the protuberances 42 inside the corresponding anchoring grooves 12 forms an effective device for preventing rotation of the casing 10 with respect to the metal insert 40.

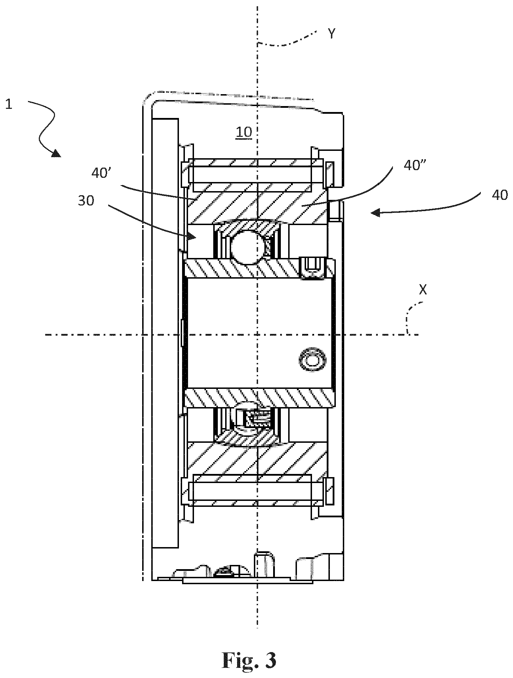

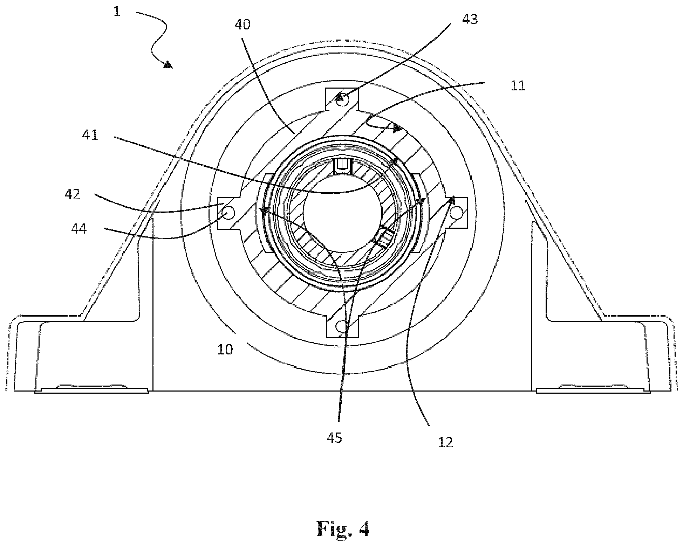

With reference to Figures 3 and 4, in a second preferred embodiment of the invention, the metal insert 40 is formed as two half-shells 40', 40" with a substantially semi-cylindrical shape, arranged adjacent to each other and symmetrical with respect to an axis Y transverse to the support assembly. The advantage of this second embodiment is that it allows mounting of the bearing unit 30 immediately in its operating position, with arrangement around it of the two half-shells 40', 40".

Each of the two half-shells 40', 40" is provided with a plurality of radially external protuberances 42, each of which has a corresponding through-hole 43 inside which a connecting pin 43 is received for ensuring the stable locking together of the two half-shells 40', 40". The protuberances 42 have a substantially parallelepiped shape, namely a shape identical to the shape of the protuberances of the first embodiment of the invention.

The protuberances 42, during co-moulding with the casing 10, will form along the mounting surface 11 of the casing respective radially internal anchoring grooves 12. The housing which is created co-moulding of the protuberances 42 inside the corresponding anchoring grooves 12 also forms, for this second embodiment, an effective device for preventing rotation of the casing 10 with respect to the metal insert 40, namely the two half-shells 40', 40".

Preferably, the protuberances 42 and the corresponding through-holes 43 are four in number for each half-shell 40', 40", being angularly spaced at 90°, and the connecting pins 44 are also four in number and angularly spaced at 90°.

Therefore, in this second embodiment, the protuberances 42 perform two functions: that of allowing housing of the connecting pins 44 of the two half-shells 40', 40" and that of acting as a device for preventing rotation.

Advantageously, the operation of co-moulding the casing may be performed after the bearing unit 30 and the two half-shells 40', 40" have already been mounted.

In this second embodiment, each of the two half-shells 40', 40" of the metal insert 40 may also be provided with two insertion recesses 45 configured, as in the first embodiment, to allow the insertion of the bearing unit 30 inside the further spherical mounting surface 41 and the rotation of the bearing unit 30 itself so that it is positioned in the mounting configuration. The insertion recesses 45 are formed along the spherical mounting surface 41 of the two half-shells 40', 40" of the metal insert 40 and have a circumferential development with an angular opening of the about 30°.

It is clear that the insertion recesses 45 are not necessary in this second embodiment in which the metal insert 40 is formed by the two half-shells 40', 40" and therefore the same embodiment may also be without the insertion recesses 45.

Owing to the presence of the insertion recesses 45, however, it is possible to achieve standardization of the production, with the possibility of performing, as required, mounting of the bearing unit 30 together with the two half-shells 40', 40" and co-moulding of casing 10 onto this subassembly or, vice versa, co-moulding of the casing 10 with the two half-shells only and, then, mounting inside the bearing unit 30.

Whatever the configuration prechosen from among those described above, with the present invention it is possible to obtain a set of modular configurations in which the casing 10 always has the same diameter of the mounting surface 11 and the metal insert 40 may be adapted to different configurations of the shaft 2 and consequent bearing units 30 with a different diameter of the spherical mounting surface 39 of the radially outer ring 31. In other words, the diameter of the spherical mounting surface 41 of the metal insert 40 is not predefined, but in each case is adapted (i.e. is substantially equal to) the diameter of the spherical mounting surface 39 of the radially outer ring 31 of the bearing unit 30.

To summarise, the present invention offers the following advantages:
- it is possible to standardize the casing by providing, for the solutions which require it, only one or more seats for housing the protuberances of the metal insert;
- the modularity is obtained simply by providing different metal inserts which differ only in terms of the diameter of the radially internal, spherical, mounting surface which will house corresponding bearing units with a different-size spherical mounting surface;
- in the configuration of the metal insert formed by two half-shells, the axial tightening together of the two metal half-shells is ensured by the presence of the connecting pins. This solution guarantees both a high nominal load and easy mounting;
- the solution of the metal insert formed by two half-shells does not necessarily require even the presence of the insertion recesses for subsequent mounting of the bearing unit.

Finally, with this solution it is possible to obtain correct values of the alignment torque without the risk of damaging the casing made of composite material.

In addition to the embodiments of the invention, as described above, it is to be understood that numerous further variants exist within the scope of the appended claims.

## Claims

1. Support assembly (1) having a central axis (X) and comprising:
- a casing (10) made of composite material and comprising a radially internal mounting surface (11),
- a bearing unit (30) housed inside the casing (10) and provided with a radially outer ring (31) having a radially external, spherical, mounting surface (39),
wherein
- a metal insert (40) is interposed between the casing (10) and the bearing unit (30) and is housed inside the mounting surface (11) of the casing (10), and
- the metal insert (40) is provided with a radially internal, spherical, mounting surface (41), inside which the bearing unit (30) is housed.
the support assembly (1) being **characterized in that**
- the casing (10) is co-moulded with the metal insert (40).

2. Support assembly (1) according to Claim 1, wherein the metal insert (40) is made as a single piece and comprises two insertion recesses (45) formed along the spherical mounting surface (41) of the metal insert (40) and configured to allow insertion of the bearing unit (30) inside the spherical mounting surface (41) and rotation of the bearing unit into the operating position.

3. Support assembly (1) according to claim 2, wherein the metal insert (40) has a plurality of radially external protuberances (42), with a substantially parallelepiped shape, which, during operation, are housed in respective anchoring grooves (12) present on the mounting surface (11) of the casing (10).

4. Support assembly (1) according to Claim 2, wherein the protuberances (42) are four in number and uniformly distributed at an angular distance of 90°.

5. Support assembly (1) according to Claim 1, wherein the metal support (40) is made of two half-shells (40', 40") with a substantially semi-cylindrical shape, arranged adjacent to each other and symmetrical with each other relative to an axis (Y) transverse to the support assembly.

6. Support assembly (1) according to Claim 5, wherein each of the two half-shells (40', 40") is provided with the plurality of radially external protuberances (42), each of the protuberances (42) having a corresponding through-hole (43) inside which a connecting pin (44) is received for ensuring the stable locking together of the two half-shells (40', 40").

7. Support assembly (1) according to Claim 6, wherein the protuberances (42), the corresponding through-holes (43) and the connecting pins (44) are four in number for each half-shell (40', 40") and angularly spaced at 90°.

8. Support assembly (1) according to one of Claims 5 to 7, wherein each of the two half-shells (40', 40") of the metal insert (40) is provided with two insertion recesses (45) formed along the spherical mounting surface (41) of the metal insert (40).

9. Support assembly (1) according to one of the preceding claims,
wherein the diameter of the mounting surface (11) of the casing (10) is predefined, while the diameter of the spherical mounting surface (41) of the metal insert (40) is not predefined but is substantially equal to the diameter of the spherical mounting surface (39) of the radially outer ring (31) of the bearing unit (30).

## Patentansprüche

1. Stützanordnung (1) mit einer Mittelachse (X) und umfassend:
- ein Gehäuse (10) aus Verbundwerkstoff und umfassend eine radial innere Montagefläche (11),
- eine Lagereinheit (30), die innerhalb des Gehäuses (10) untergebracht ist und mit einem radial äußeren Ring (31) mit einer radial äußeren, kugelförmigen Montagefläche (39) versehen ist,
wobei
- zwischen dem Gehäuse (10) und der Lagereinheit (30) ein Metalleinsatz (40) angeordnet ist, der innerhalb der Montagefläche (11) des Gehäuses (10) untergebracht ist, und
- der Metalleinsatz (40) mit einer radial inneren, kugelförmigen Montagefläche (41) versehen ist, in der die Lagereinheit (30) untergebracht ist,
wobei die Stützanordnung (1) **dadurch gekennzeichnet ist, dass**:
- das Gehäuse (10) zusammen mit dem Metalleinsatz (40) geformt ist.

2. Stützanordnung (1) nach Anspruch 1, wobei der Metalleinsatz (40) als Einzelteil hergestellt ist und zwei Einsetzausnehmungen (45) umfasst, die entlang der kugelförmigen Montagefläche (41) des Metalleinsatzes (40) ausgebildet und dazu ausgelegt sind, das Einsetzen der Lagereinheit (30) innerhalb der kugelförmigen Montagefläche (41) und das Drehen der Lagereinheit in die Betriebsposition zuzulassen.

3. Stützanordnung (1) nach Anspruch 2, wobei der Metalleinsatz (40) mehrere radial äußere Vorsprünge (42) mit einer im Wesentlichen parallelepipedförmigen Form aufweist, die während des Betriebs in jeweiligen Verankerungsnuten (12) untergebracht sind, die auf der Montagefläche (11) des Gehäuses (10) vorhanden sind.

4. Stützanordnung (1) nach Anspruch 2, wobei die Vorsprünge (42) vier in der Anzahl und in einem Winkelabstand von 90° gleichmäßig verteilt sind.

5. Stützanordnung (1) nach Anspruch 1, wobei die Metallstütze (40) aus zwei Halbschalen (40', 40") mit einer im Wesentlichen halbzylindrischen Form hergestellt ist, die benachbart zueinander angeordnet und bezüglich einer Achse (Y) quer zur Stützanordnung symmetrisch zueinander sind.

6. Stützanordnung (1) nach Anspruch 5, wobei jede der zwei Halbschalen (40', 40") mit den mehreren radial äußeren Vorsprüngen (42) versehen ist, wobei jeder der Vorsprünge (42) eine entsprechende Durchgangsbohrung (43) aufweist, in der ein Verbindungsstift (44) aufgenommen ist, um die stabile Verriegelung der zwei Halbschalen (40', 40") miteinander zu gewährleisten.

7. Stützanordnung (1) nach Anspruch 6, wobei die Vorsprünge (42), die entsprechenden Durchgangsbohrungen (43) und die Verbindungsstifte (44) für jede Halbschale (40', 40") vier in der Anzahl und winkelmäßig mit 90° beabstandet sind.

8. Stützanordnung (1) nach einem der Ansprüche 5 bis 7, wobei jede der zwei Halbschalen (40', 40") des Metalleinsatzes (40) mit zwei Einsetzausnehmungen (45) versehen ist, die entlang der kugelförmigen Montagefläche (41) des Metalleinsatzes (40) ausgebildet sind.

9. Stützanordnung (1) nach einem der vorhergehenden Ansprüche, wobei der Durchmesser der Montagefläche (11) des Gehäuses (10) vordefiniert ist, während der Durchmesser der kugelförmigen Montagefläche (41) des Metalleinsatzes (40) nicht vordefiniert ist, sondern im Wesentlichen gleich dem Durchmesser der kugelförmigen Montagefläche (39) des radial äußeren Rings (31) der Lagereinheit (30) ist.

## Revendications

1. Ensemble de support (1) présentant un axe central (X) et comprenant :
- un carter (10) réalisé en matériau composite et comprenant une surface de montage radialement intérieure (11),
- un palier (30) logé à l'intérieur du carter (10) et pourvu d'une bague radialement extérieure (31) ayant une surface de montage (39) radialement extérieure sphérique, où
- une garniture métallique (40) est interposée entre le carter (10) et le palier (30) et est logée à l'intérieur de la surface de montage (11) du carter (10), et
- la garniture métallique (40) est pourvue d'une surface de montage (41) radialement intérieure sphérique à l'intérieur de laquelle est logé le palier (30),
l'ensemble de support (1) étant **caractérisé en ce que** :
- le carter (10) est co-moulé avec la garniture métallique (40).

2. Ensemble de support (1) selon la revendication 1, dans lequel la garniture métallique (40) est réalisée en une seule pièce et comprend deux renfoncements d'insertion (45) formés le long de la surface de montage sphérique (41) de la garniture métallique (40) et configurés pour permettre l'insertion du palier (30) à l'intérieur de la surface de montage sphérique (41) et la rotation du palier jusqu'à la position de fonctionnement.

3. Ensemble de support (1) selon la revendication 2, dans lequel la garniture métallique (40) présente une pluralité de saillies (42) radialement extérieures, de forme sensiblement parallélépipédique, qui, en fonctionnement, sont logées dans des rainures d'ancrage (12) respectives présentes sur la surface de montage (11) du carter (10).

4. Ensemble de support (1) selon la revendication 2, dans lequel les saillies (42) sont au nombre de quatre et régulièrement réparties à une distance angulaire de 90°.

5. Ensemble de support (1) selon la revendication 1, dans lequel le support métallique (40) est constitué de deux demi-coquilles (40', 40") de forme sensiblement semi-cylindrique, disposées adjacentes l'une à l'autre et symétriques par rapport à un axe (Y) transversal à l'ensemble de support.

6. Ensemble de support (1) selon la revendication 5, dans lequel chacune des deux demi-coquilles (40', 40") est pourvue de la pluralité de saillies (42) radialement extérieures, chacune des saillies (42) présentant un trou traversant (43) correspondant à l'intérieur duquel une cheville de raccordement (44) est reçue pour assurer un assemblage solide des deux demi-coquilles (40', 40").

7. Ensemble de support (1) selon la revendication 6, dans lequel les saillies (42), les trous traversants (43) correspondants et les chevilles de raccordement (44) sont au nombre de quatre pour chaque demi-coquille (40', 40") et angulairement espacées de 90°.

8. Ensemble de support (1) selon l'une des revendications 5 à 7, dans lequel chacune des deux demi-coquilles (40', 40") de la garniture métallique (40) est pourvue de deux renfoncements d'insertion (45) formés le long de la surface de montage sphérique (41) de la garniture métallique (40).

9. Ensemble de support (1) selon l'une des revendications précédentes, dans lequel le diamètre de la surface de montage (11) du carter (10) est prédéfini, tandis que le diamètre de la surface de montage sphérique (41) de la garniture métallique (40) n'est pas prédéfini mais est sensiblement égal au diamètre de la surface de montage sphérique (39) de la bague radialement extérieure (31) du palier (30).
